# FASCICULE DE BREVET EUROPEEN

(11) **EP 2 072 763 B1**
(45) Date de publication et mention de la délivrance du brevet: **08.04.2015**
(21) Numéro de dépôt: 07447069.1
(22) Date de dépôt: 21.12.2007
(51) Int. Cl.: F01D 25/08, F28D 1/04, F28D 7/00, F28D 9/00, F28D 21/00

(54) **Système d'échange de chaleur dans une turbomachine**
Wärmetauschersystem in einer Strömungsmaschine
Heat exchange system in a turbomachine

(43) Date de publication de la demande: 24.06.2009
(73) Titulaire: Techspace Aero S.A., 4041 Milmort (BE)
(72) Inventeur: Cornet, Albert, 4800 Verviers (BE); Raimarckers, Nicolas, 4263 Tourinne (BE); Bajusz, Denis, 1030 Schaerbeek (BE)
(74) Mandataire: Pronovem

(56) Documents cités:
- EP-A- 1 857 638
- DE-B3-102006 023 809
- GB-A- 2 052 722
- GB-A- 2 279 734
- US-A- 5 409 058

## Description

### Objet de l'invention

La présente invention se rapporte au domaine des échangeurs de chaleur, de préférence destinés au refroidissement de l'huile, pour système de lubrification d'un moteur aéronautique, en particulier d'une turbomachine.

### Etat de la technique

Dans une turbomachine, différents organes et équipements doivent être lubrifiés et/ou refroidis, la chaleur générée étant généralement transportée par des systèmes d'huile et évacuée par des échangeurs carburant-huile et/ou air-huile. Chaque organe ou équipement ayant ses propres spécifications au niveau de la lubrification, plusieurs systèmes d'huile peuvent coexister, avec leurs propres compositions, pressions, températures, etc. Dans le cadre de la tendance actuelle au « plus électrique » dans les turbomachines, on pourrait par exemple avoir un système de lubrification pour le générateur-démarreur (« starter-generator », S/G) distinct du système d'huile pour les enceintes de paliers du moteur. Le cas échéant, les calories générées dans ces deux systèmes doivent dès lors être reprises par l'huile, qui agit comme fluide de lubrification mais également comme fluide caloporteur, dans le cadre de l'évolution actuelle des moteurs. Les besoins en huile sont donc nécessairement augmentés dans ce cas de figure. Traditionnellement, selon l'état de la technique, les circuits de lubrification et refroidissement des équipements électriques (S/G) sont séparés du circuit de la turbomachine, chacun possédant son système de circulation, généralement basé sur des pompes volumétriques et son système de refroidissement tel qu'un échangeur air-huile et/ou fuel-huile (« radiateur »).

L'échangeur de chaleur de chaque circuit est dimensionné pour son point de vol critique qui dépend du profil de génération de chaleur de la machine à refroidir et de la disponibilité de la source froide ainsi que de l'utilisation éventuelle d'une autre source froide.

Ceci entraîne donc les effets négatifs suivants :
- un surdimensionnement de l'équipement pour tous les autres cas d'où une masse importante de l'équipement ;
- un surdimensionnement de l'équipement pour tous les autres cas d'où une perturbation inutile du flux d'air et plus généralement une perte de rendement de la turbomachine, dans le cas d'un échange avec l'air ;
- un sur-refroidissement de l'huile dans tous les autres cas, ce qui nécessite des équipements de régulation supplémentaires.

Les paramètres de dimensionnement étant différents pour les deux circuits en présence, les points de dimensionnement de l'échangeur de chaque circuit sont donc différents également.

Pour les systèmes de refroidissement des moteurs à explosion de véhicule automobile, le document GB 2 052 722 A divulgue un échangeur de chaleur à plusieurs fluides en une seule unité où un fluide est utilisé pour refroidir au moins un autre fluide séparé. Il peut y avoir plusieurs fluides en jeu, par ex. le fluide de refroidissement destiné à refroidir, d'une part, l'huile de transmission et, d'autre part, l'huile du moteur et l'air destiné à refroidir le fluide de refroidissement. Les différents circuits d'huile sont disposés dans des compartiments distincts de l'échangeur et ne peuvent, en conséquence, pas échanger de chaleur entre eux.

### Buts de l'invention

La présente invention vise à fournir une solution qui permette de s'affranchir des inconvénients de l'état de la technique.

En particulier, l'invention a pour but de proposer un système de refroidissement qui permette d'éviter tout surdimensionnement des échangeurs de chaleurs individuels liés à deux ou plusieurs structures de refroidissement dans une turbomachine.

En particulier, l'invention a encore pour but de réduire la masse de ces équipements, ainsi que les prélèvements d'air inutiles.

L'invention a encore pour but de ne plus nécessiter d'équipement de régulation supplémentaire de par la simplification du système de refroidissement.

### Principaux éléments caractéristiques de l'invention

Un premier objet de la présente invention se rapporte à un système d'échange de chaleur dans une turbomachine comprenant une pluralité d'organes et équipements à refroidir et/ou à lubrifier, ledit système comprenant au moins deux circuits d'huile distincts pour refroidir et/ou lubrifier lesdits équipements, caractérisé en ce que ledit système est configuré pour mettre lesdits circuits d'huile en contact thermique entre eux d'une part et avec un fluide jouant le rôle de source froide d'autre part.

Selon une forme d'exécution préférée de l'invention, l'échangeur comprend un élément d'échange fluide-huile, commun aux deux circuits d'huile.

De préférence, ledit élément d'échange commun comprend une plaque incorporant chacun desdits circuits d'huile et qui échange de la chaleur avec le fluide d'un seul ou des deux côtés externes de la plaque.

De préférence encore, le ou les côtés externes de la plaque, utilisé(s) pour l'échange de chaleur entre les circuits d'huile et ledit fluide, est (sont) sous forme, muni(s) ou surmonté(s) d'ailettes.

Selon une première forme d'exécution préférée, l'élément d'échange commun est de type surfacique, c'est-à-dire comprenant une seule plaque apte à s'incorporer le long d'une surface existante.

Selon une deuxième forme d'exécution préférée, l'élément d'échange, commun aux deux circuits d'huile, est de type « sandwich », c'est-à-dire comportant un empilement d'une pluralité de plaques contenant les circuits d'huile individuels séparés par des ailettes entre lesquelles circule ledit fluide.

Selon ces formes d'exécution, les circuits d'huile sont de préférence entremêlés dans chaque plaque.

Alternativement encore, la plaque est séparée en deux parties par une cloison où circule ledit fluide et dont la nature et l'épaisseur sont choisies pour réguler l'interaction thermique.

De préférence, la cloison est munie d'ailettes.

Avantageusement, le fluide échangeur de chaleur est l'air externe ou un carburant.

Selon une forme d'exécution alternative de l'invention, le système d'échange de chaleur comprend un élément d'échange fluide-huile, commun aux deux circuits d'huile, comprenant un ou plusieurs tubes et un caisson.

Selon une première modalité d'exécution, au moins un premier tube comprend le premier circuit d'huile et au moins un second tube comprend le second circuit d'huile, l'ensemble des tubes baignant dans le fluide jouant le rôle de source froide et circulant dans le caisson. Dans ce cas, ce dernier est l'air ou, de préférence, le carburant du moteur.

Selon une seconde modalité d'exécution, le ou les tubes d'une part transportent le fluide et d'autre part baignent dans le caisson dont un premier compartiment fait partie du premier circuit d'huile et un second compartiment fait partie du second circuit d'huile.

Toujours selon l'invention, chaque circuit d'huile individuel comporte avantageusement, outre l'élément d'échange commun, des moyens d'échange de chaleur propres.

Avantageusement, l'élément d'échange commun peut se trouver soit en amont, soit en aval des moyens d'échange de chaleur propres, par rapport aux organes et équipements à refroidir et/ou à lubrifier.

Un deuxième objet de la présente invention se rapporte à un système de lubrification et/ou de refroidissement pour turbomachine comprenant un système d'échange de chaleur selon les caractéristiques précitées.

Avantageusement, le premier circuit de lubrification alimente le circuit moteur de la turbomachine et le second circuit de lubrification alimente un générateur-démarreur électrique (S/G).

Un troisième objet de la présente invention concerne une turbomachine comportant le système de lubrification et/ou refroidissement précité.

### Brève description des figures

La figure 1 représente schématiquement un échangeur de chaleur air-huile 4 commun à deux systèmes de refroidissement 2,3, celui du moteur proprement dit et celui du S/G, dans une turbomachine, selon la présente invention.

La figure 2 représente schématiquement une première forme d'exécution préférée de la présente invention où deux circuits d'huile sont agencés dans une plaque qui échange de la chaleur avec l'air ambiant ou le carburant.

La figure 3 représente schématiquement une deuxième forme d'exécution préférée de la présente invention où deux circuits d'huile sont agencés dans une plaque qui échange de la chaleur avec l'air ambiant ou le carburant.

La figure 4 représente une troisième forme d'exécution préférée de la présente invention, où la plaque d'échange est divisée en deux parties, l'interaction thermique étant régulée par la nature et l'épaisseur de la séparation entre les deux sections.

Les figures 5A et 5B représentent des formes d'exécution alternatives de l'invention, où l'échangeur de chaleur comprend un élément d'échange fluide-huile du type à tubes et caisson.

### Description d'une forme d'exécution préférée de l'invention

L'invention consiste à combiner les fonctions d'évacuation de chaleur (ou de « calories ») de deux ou plusieurs systèmes ou circuits d'huile 2,3 dans une turbomachine, en un seul échangeur de chaleur commun 4. Le dimensionnement des échangeurs des deux circuits 2,3 étant en principe réalisé pour des cas de vol différents, l'utilisation d'un équipement commun 4 pour réaliser les deux fonctions permet de réduire les surdimensionnements ainsi que ses inconvénients dans tous les autres cas de vol.

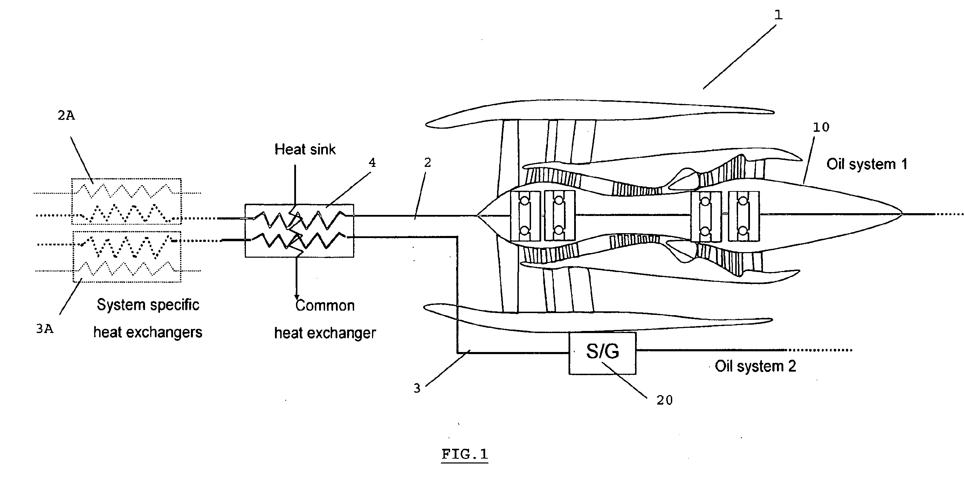

Cet équipement sert principalement à refroidir les deux huiles tout en générant une interaction thermique aux effets bénéfiques entre les deux systèmes. Il ne doit pas nécessairement être le seul moyen d'évacuer la chaleur pour les deux circuits d'huile 2,3, qui peuvent chacun contenir des moyens de refroidissement propres individuels 2A,3A (voir figure 1) .

La conception sera développée selon le degré d'interaction désiré entre les comportements thermiques des deux systèmes d'huile. Le refroidissement global des deux systèmes d'huile est assuré par l'air ou par carburant, et l'interaction entre les deux huiles permet une régulation de leurs températures sur tous les régimes moteurs, une huile pouvant être employée pour apporter soit un complément de refroidissement, soit un échauffement (dans le cas d'une huile sur-refroidie) à l'autre huile. On a alors une auto-régulation entre les deux huiles à l'aide d'un composant passif (radiateur commun), où les rôles respectifs des deux huiles peuvent s'inverser d'un régime moteur à l'autre.

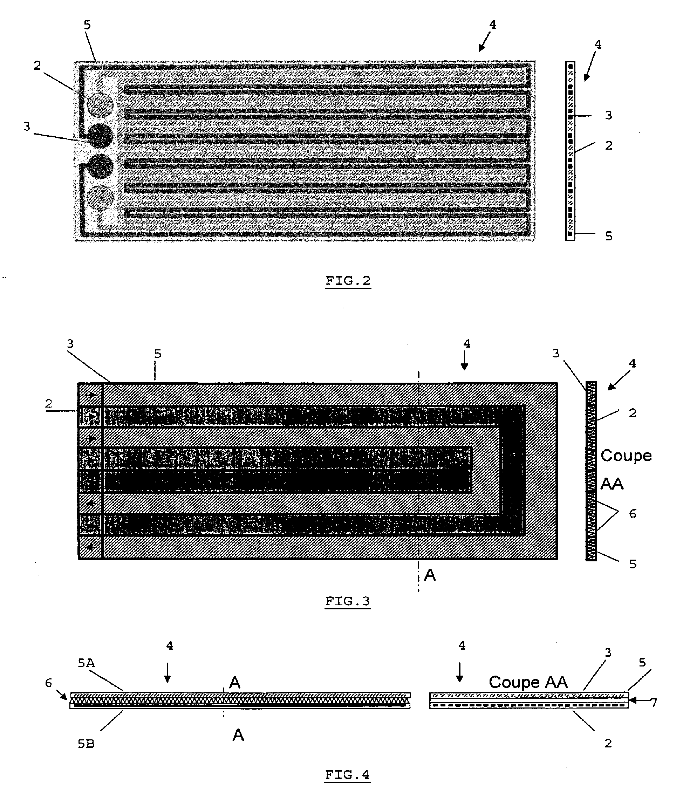

La solution proposée, selon une première forme d'exécution préférée de l'invention, peut être implémentée soit dans un élément d'échange ou ACOC (ACOC pour Air *Cooled Oil* Cooler) surfacique 4, comportant une seule plaque 5 avec circuit d'huile échangeant la chaleur avec l'air d'un seul ou des deux côtés externes, ceux-ci étant de préférence munis d'ailettes 6, soit dans un ACOC de type « sandwich » ou « plates and fins », comportant un empilement de plaques 5 avec circuits d'huiles séparés par des ailettes 6 où circule l'air (non représenté). L'agencement des deux circuits d'huile dans chaque plaque dépendra du degré d'interaction thermique désiré entre les deux huiles. Selon une autre forme d'exécution préférée, les deux circuits seront plus ou moins fortement entremêlés dans une même plaque (voir figures 2 et 3). Selon encore une autre forme d'exécution préférée, une ou plusieurs des plaques 5, représentées sur les figures 2 et 3, sera séparée en deux parties 5A, 5B, l'interaction thermique entre les huiles respectives étant régulée par la nature et l'épaisseur d'une cloison de séparation 7, de préférence munie d'ailettes 6 (voir figure 4).

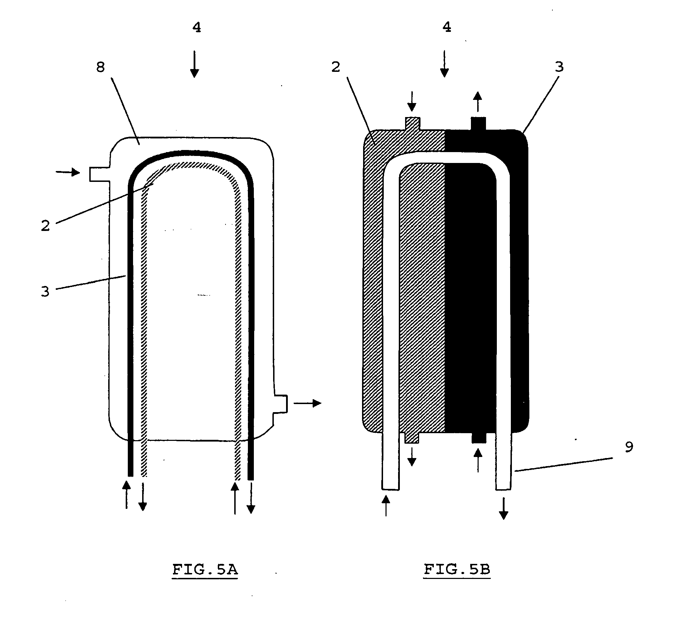

Des formes d'exécution alternatives de l'invention sont représentées respectivement sur les figures 5A et 5B (échangeur de type « tubes and shell »). Sur la figure 5A, le premier circuit d'huile 2 et le second circuit d'huile 3 ont la forme de tubes qui baignent dans un caisson 8 dans lequel le fluide qui joue le rôle de source froide circule. De préférence ledit fluide est le carburant du moteur. Sur la figure 5B, le ou les tubes 9 transportent le fluide (carburant) et baignent dans un caisson comprenant, isolés l'un de l'autre, d'une part un compartiment faisant partie du premier circuit d'huile 2 et d'autre part dans un compartiment faisant partie du second circuit d'huile 3.

### Avantages de l'invention

- combinaison du refroidissement de deux huiles différentes en un seul élément ACOC, permettant d'éviter la présence de deux structures de refroidissement, et donc de faire une économie de masse et d'encombrement, notamment en ce qui concerne les fixations et connexions ;
- contrôle possible de l'interaction thermique entre les deux circuits de lubrification via le dessin de l'échangeur. En utilisant une première huile pour refroidir la seconde huile lors d'un régime moteur, on réduit le besoin d'interaction avec le flux d'air et donc, éventuellement, la perturbation du flux d'air. Cette solution permet aussi d'éviter un sur-refroidissement éventuel à régime moteur élevé, l'huile trop froide prenant des calories à l'huile la plus chaude ;
- rendement de l'échange de chaleur entre deux fluides hydrauliques supérieur à celui de l'échange huile/air (dans le cas d'un ACOC), même si *in fine* globalement l'échange se fera avec l'air extérieur.

## Revendications

1. Système d'échange de chaleur dans une turbomachine comprenant une pluralité d'organes et équipements (10,20) à refroidir et/ou à lubrifier, ledit système comprenant au moins deux circuits d'huile distincts (2,3) pour refroidir et/ou lubrifier lesdits équipements (10,20), ledit système étant configuré pour mettre lesdits circuits d'huile (2,3) en contact thermique entre eux d'une part et avec un fluide jouant le rôle de source froide d'autre part.

2. Système d'échange de chaleur selon la revendication 1, **caractérisé en ce qu'**il comprend un élément d'échange fluide-huile (4), commun aux deux circuits d'huile (2,3).

3. Système d'échange de chaleur selon la revendication 2, **caractérisé en ce que** ledit élément d'échange commun (4) comprend une plaque (5) incorporant chacun desdits circuits d'huile (2,3) et qui échange de la chaleur avec le fluide d'un seul ou des deux côtés externes de la plaque (5).

4. Système d'échange de chaleur selon la revendication 3, **caractérisé en ce que** le ou les côtés externes de la plaque (5), utilisé(s) pour l'échange de chaleur entre les circuits d'huile (2,3) et ledit fluide, est (sont) sous forme, muni(s) ou surmonté(s) d'ailettes (6).

5. Système d'échange de chaleur selon la revendication 3 ou 4, **caractérisé en ce que** l'élément d'échange commun (4) est de type surfacique, c'est-à-dire comprenant une seule plaque apte à s'incorporer le long d'une surface existante.

6. Système d'échange de chaleur selon la revendication 3 ou 4, **caractérisé en ce que** l'élément d'échange commun (4) est de type « sandwich », c'est-à-dire comportant un empilement d'une pluralité de plaques (5) contenant les circuits d'huile individuels (2,3) séparés par des ailettes (6) entre lesquelles circule ledit fluide.

7. Système d'échange de chaleur selon l'une quelconque des revendications 3 à 6, **caractérisé en ce que** les circuits d'huile (2,3) sont entremêlés dans chaque plaque (5).

8. Système d'échange de chaleur selon l'une quelconque des revendications 3 à 7, **caractérisé en ce qu'**au moins une plaque (5) est séparée en deux parties (5A, 5B) par une cloison (7) où circule ledit fluide et dont la nature et l'épaisseur sont choisies pour réguler l'interaction thermique.

9. Système d'échange de chaleur selon la revendication 8, **caractérisé en ce que** la cloison (7) est munie d'ailettes (6).

10. Système d'échange de chaleur selon l'une quelconque des revendications précédentes, **caractérisé en ce que** le fluide échangeur de chaleur est l'air externe ou un carburant.

11. Système d'échange de chaleur selon la revendication 1, **caractérisé en ce qu'**il comprend un élément d'échange fluide-huile (4), commun aux deux circuits d'huile (2,3), comprenant un ou plusieurs tubes et un caisson.

12. Système d'échange de chaleur selon la revendication 11, **caractérisé en ce qu'**au moins un premier tube comprend le premier circuit d'huile (2) et au moins un second tube comprend le second circuit d'huile (3), l'ensemble des tubes baignant dans le fluide jouant le rôle de source froide et circulant dans le caisson (8).

13. Système d'échange de chaleur selon la revendication 12, **caractérisé en ce que** le fluide jouant le rôle de source froide est l'air extérieur ou le carburant du moteur.

14. Système d'échange de chaleur selon la revendication 11, **caractérisé en ce que** le ou les tubes (9) d'une part transportent le fluide et d'autre part baignent dans le caisson dont un premier compartiment fait partie du premier circuit d'huile (2) et un second compartiment fait partie du second circuit d'huile (3).

15. Système d'échange de chaleur selon l'une quelconque des revendications précédentes, **caractérisé en ce que** chaque circuit d'huile individuel (2,3) comporte, outre l'élément d'échange commun (4), des moyens d'échange de chaleur propres (2A, 3A).

16. Système d'échange de chaleur selon la revendication 15, **caractérisé en ce que** l'élément d'échange commun (4) peut se trouver soit en amont, soit en aval des moyens d'échange de chaleur propres (2A, 3A), par rapport aux organes et équipements à refroidir et/ou à lubrifier.

17. Système de lubrification et/ou de refroidissement pour turbomachine comprenant un système d'échange de chaleur selon l'une quelconque des revendications 1 à 16.

18. Système de lubrification et/ou de refroidissement selon la revendication 17, **caractérisé en ce que** le premier circuit de lubrification alimente le circuit moteur de la turbomachine et le second circuit de lubrification alimente un générateur-démarreur électrique (S/G).

19. Turbomachine comportant un système de lubrification selon la revendication 18.

## Patentansprüche

1. Wärmetauschsystem in einer Strömungsmaschine, die eine Vielzahl von zu kühlenden und/oder schmierenden Organen und Ausrüstungen (10, 20) umfasst, wobei das System mindestens zwei unterschiedliche Ölkreise (2, 3) zum Kühlen und/oder Schmieren der Ausrüstungen (10, 20) umfasst, wobei das System konfiguriert ist, um die Ölkreise (2,3) in thermischen Kontakt einerseits miteinander und andererseits mit einem Fluid zu versetzen, das die Aufgabe einer kalten Quelle erfüllt.

2. Wärmetauschsystem nach Anspruch 1, **dadurch gekennzeichnet, dass** es ein Fluid-Öl-Austauschelement (4) umfasst, das beiden Ölkreisen (2, 3) gemeinsam ist.

3. Wärmetauschsystem nach Anspruch 2, **dadurch gekennzeichnet, dass** das gemeinsame Austauschelement (4) eine Platte (5) umfasst, die jeden der Ölkreise (2, 3) integriert und die auf einer einzigen oder auf den zwei äußeren Seiten der Platte (5) mit dem Fluid Wärme austauscht.

4. Wärmetauschsystem nach Anspruch 3, **dadurch gekennzeichnet, dass** die äußere(n) Seite(n) der Platte (5), die für den Wärmeaustausch zwischen den Ölkreisen (2, 3) und dem Fluid verwendet wird/werden, eine mit Flügeln (6) ausgestattete oder besetzte Form hat/haben.

5. Wärmetauschsystem nach Anspruch 3 oder 4, **dadurch gekennzeichnet, dass** das gemeinsame Austauschelement (4) vom Flächentyp ist, das heißt, dass es eine einzige Platte umfasst, die imstande ist, sich entlang einer vorhandenen Fläche zu integrieren.

6. Wärmetauschsystem nach Anspruch 3 oder 4, **dadurch gekennzeichnet, dass** das gemeinsame Austauschelement (4) vom "Sandwichtyp" ist, das heißt, dass es eine Stapelung einer Vielzahl von Platten (5) umfasst, die die individuellen Ölkreise (2, 3) enthalten, die durch Flügel (6) getrennt sind, zwischen denen das Fluid zirkuliert.

7. Wärmetauschsystem nach einem der Ansprüche 3 bis 6, **dadurch gekennzeichnet, dass** die Ölkreise (2, 3) in jeder Platte (5) verschlungen sind.

8. Wärmetauschsystem nach einem der Ansprüche 3 bis 7, **dadurch gekennzeichnet, dass** mindestens eine Platte (5) von einer Trennwand (7), wo das Fluid zirkuliert und deren Art und Dicke ausgewählt sind, um die thermische Interaktion zu regeln, in zwei Teile (5A, 5B) getrennt ist.

9. Wärmetauschsystem nach Anspruch 8, **dadurch gekennzeichnet, dass** die Trennwand (7) mit Flügeln (6) ausgestattet ist.

10. Wärmetauschsystem nach einem der vorangehenden Ansprüche, **dadurch gekennzeichnet, dass** das Wärmetauschfluid die Außenluft oder ein Brennstoff ist.

11. Wärmetauschsystem nach Anspruch 1, **dadurch gekennzeichnet, dass** es ein Fluid-Öl-Austauschelement (4) umfasst, das beiden Ölkreisen (2, 3) gemeinsam ist, das ein oder zwei Rohre und einen Kasten umfasst.

12. Wärmetauschsystem nach Anspruch 11, **dadurch gekennzeichnet, dass** mindestens ein erstes Rohr den ersten Ölkreis (2) umfasst und mindestens ein zweites Rohr den zweiten Ölkreis (3) umfasst, wobei die Rohrgruppe in dem Fluid badet, das die Aufgabe einer kalten Quelle erfüllt und in dem Kasten (8) zirkuliert.

13. Wärmetauschsystem nach Anspruch 12, **dadurch gekennzeichnet, dass** das Fluid, das die Aufgabe einer kalten Quelle erfüllt, die Außenluft oder der Brennstoff des Motors ist.

14. Wärmetauschsystem nach Anspruch 11, **dadurch gekennzeichnet, dass** das oder die Rohre (9) einerseits das Fluid transportieren und andererseits in dem Kasten baden, von dem ein erstes Abteil zum ersten Ölkreis (2) gehört und ein zweites Abteil zum zweiten Ölkreis (3) gehört.

15. Wärmetauschsystem nach einem der vorangehenden Ansprüche, **dadurch gekennzeichnet, dass** jeder individuelle Ölkreis (2, 3) neben dem gemeinsamen Austauschelement (4) eigene Wärmetauschmittel (2A, 3A) aufweist.

16. Wärmetauschsystem nach Anspruch 15, **dadurch gekennzeichnet, dass** sich das gemeinsame Austauschelement (4) im Verhältnis zu den zu kühlenden und/oder zu schmierenden Organen und Ausrüstungen entweder vor oder nach den eigenen Wärmetauschmitteln (2A, 3A) befinden kann.

17. Schmier- und/oder Kühlsystem für eine Strömungsmaschine, das ein Wärmetauschsystem nach einem der Ansprüche 1 bis 16 umfasst.

18. Schmier- und/oder Kühlsystem für eine Strömungsmaschine nach Anspruch 17, **dadurch gekennzeichnet, dass** der erste Schmierkreis den Motorkreis der Strömungsmaschine versorgt und der zweite Schmierkreis einen elektrischen Generator-Starter (S/G) versorgt.

19. Strömungsmaschine, die ein Schmiersystem nach Anspruch 18 aufweist.

## Claims

1. Heat exchange system in a turbomachine comprising a number of units and equipment (10,20) to be cooled and/or lubricated, said system containing at least two distinct oil circuits (2,3) for cooling and/or lubricating said equipment (10,20), said system being configured to put said oil circuits (2,3) in close thermal contact with each other on the one hand and with a fluid playing the part of a cold source on the other hand.

2. Heat exchange system as in Claim 1, **characterised in that** it comprises a fluid/oil exchange element (4), common to both oil circuits (2,3).

3. Heat exchange system as in Claim 2, **characterised in that** said common exchange element (4) comprises a plate (5) which incorporates each of said oil circuits (2,3) and which exchanges heat with the fluid of one single external side of the plate (5) or both.

4. System of heat exchange as in Claim 3, **characterised in that** the external side(s) of the plate (5), used for the heat exchange between the oil circuits (2,3) and said fluid, is/are in the form of, equipped with or surmounted with fins (6).

5. Heat exchange system as in Claim 3 or Claim 4, **characterised in that** the common exchange element (4) is of a surface type, which means it comprises a single plate designed to be incorporated along an existing surface.

6. Heat exchange system as in Claim 3 or Claim 4, **characterised in that** the common exchange element (4) is of a "sandwich" type, which means it comprises a stack of several plates (5) containing the individual oil circuits (2,3) separated by fins (6) between which said fluid circulates.

7. Heat exchange system as in any of Claims 3 to 6, **characterised in that** the oil circuits (2,3) are entangled in each plate (5).

8. Heat exchange system as in any of Claims 3 to 7, **characterised in that** at least one plate (5) is separated into two parts (5A,5B) by a partition (7) where said fluid circulates and whose nature and thickness are selected to regulate the thermal interaction.

9. Heat exchange system as in Claim 8, **characterised in that** the partition (7) is equipped with fins (6).

10. Heat exchange system as in any of the above claims, **characterised in that** the heat exchanger fluid is the external air or a fuel.

11. Heat exchange system as in Claim 1, **characterised in that** it contains a fluid/oil exchange element (4), which is common to both oil circuits (2,3), comprising one or more tube(s) and a chamber.

12. Heat exchange system as in Claim 11, **characterised in that** at least a first tube comprises the first oil circuit (2) and at least a second tube comprises the second oil circuit (3), all the tubes soaking in the fluid playing the part of the cold source and circulating in the chamber (8).

13. Heat exchange system as in Claim 12, **characterised in that** the fluid playing the part of the cold source is the external air or the engine's fuel.

14. Heat exchange system as in Claim 11, **characterised in that** the tube(s) (9) carry the fluid on the one hand and soak in the partition on the other hand, a first compartment of which is a part of the first oil circuit (2) and a second compartment is a part of the second oil circuit (3).

15. Heat exchange system as in any of the above claims, **characterised in that** each individual oil circuit (2,3) comprises, besides the common exchange element (4), a means of heat exchange of its own (2A, 3A).

16. Heat exchange system as in Claim 15, **characterised in that** the common exchange element (4) may be located either upstream or downstream from its own means of heat exchange (2A, 3A) relative to the units and equipment to be cooled and/or lubricated.

17. Lubrication and/or cooling system for a turbomachine comprising a heat exchange system as in any of Claims 1 to 16.

18. Lubrication and/or cooling system as in Claim 17, **characterised in that** the first lubrication circuit feeds the engine circuit of the turbomachine and the second lubrication circuit feeds an electric starter-generator (S/G).

19. Turbine engine comprising a lubrication system as in Claim 18.
